# EUROPÄISCHE PATENTSCHRIFT

(11) **EP 0 548 832 B1**
(45) Veröffentlichungstag und Bekanntmachung des Hinweises auf die Patenterteilung: **23.04.1997**
(21) Anmeldenummer: 92121570.3
(22) Anmeldetag: 18.12.1992
(51) Int. Cl.: E21D 21/00, E04C 5/07, E04C 5/12, F16B 33/02

(54) **Vorrichtung zur Verankerung eines stabförmigen Zugglieds aus Faserverbundwerkstoff**
Anchoring device for the tensioning rod of an anchor made from fibre-laminate
Dispositif d'ancrage pour la barre de tension d'une ancre en laminé de fibres

(30) Priorität: 21.12.1991 DE 4142713; 21.03.1992 DE 4209265
(43) Veröffentlichungstag der Anmeldung: 30.06.1993
(73) Patentinhaber: Dyckerhoff & Widmann Aktiengesellschaft, D-81902 München (DE); RÖCHLING HAREN KG, D-49733 Haren (DE)
(72) Erfinder:
(74) Vertreter: Patentanwälte Möll und Bitterich

(56) Entgegenhaltungen:
- EP-A- 0 199 348
- EP-A- 0 306 887
- WO-A-88/08065
- WO-A-90/02866
- DE-A- 1 936 078
- DE-A- 2 505 599
- DE-A- 3 504 829
- DE-A- 3 834 266
- FR-A- 2 322 291
- NL-C- 104 229

## Beschreibung

Die Erfindung betrifft eine Vorrichtung zur Verankerung eines stabförmigen Zugglieds aus Faserverbundwerkstoff mit unidirektionalen, in eine Matrix aus Kunstharz eingebetteten Fasern, insbesondere zur Verwendung als Ankerelement im Grund- oder Bergbau, als Bewehrungselement für Beton, insbesondere Spannbeton, oder dergleichen.

Für Bauaufgaben des Ingenieurbaus werden in der letzten Zeit in zunehmendem Maße anstelle von Zuggliedern aus Stahl auch solche aus hochfesten Faserverbundwerkstoffen verwendet. Zugglieder aus Faserverbundwerkstoffen, wie z.B. Polyamid-, Aramid-, Glas- oder Karbonfasern, haben bei vergleichbarer Zugfestigkeit gegenüber Stahl ein geringeres spezifisches Gewicht, vor allem aber eine höhere Korrosionsbeständigkeit. Solche Zugglieder könnten also wegen dieser Eigenschaften mit Vorteil als Ankerelemente im Grund- und Bergbau eingesetzt werden, wo oft aggressive Wässer auftreten, die für Zugglieder aus Stahl eine Korrosionsgefahr bedeuten.

Zugglieder aus Faserverbundwerkstoffen verhalten sich bei Belastung im Gebrauchszustand auch ähnlich wie solche aus Stahl, d.h. sie haben eine im wesentlichen linear verlaufende Spannungsdehnungslinie. Im Gegensatz zu Zuggliedern aus Stahl haben sie aber keine Streckgrenze; sie brechen vielmehr bei Erreichen ihrer Zugfestigkeit ohne vorhergehende plastische Verformung. Diese Eigenschaft und die im Gegensatz zu ihrer Zugfestigkeit in Faserlängsrichtung nur geringe Querdruckfestigkeit verhindern, daß die sonst im Bauwesen bekannten und bewährten Verankerungsvorrichtungen unmittelbar übernommen werden können.

Die Verwendung von Gewindeverankerungen mit üblichem Gewindeprofil zur Verankerung von Zuggliedern aus Faserverbundwerkstoffen ist problematisch, weil die Zugkraft des Zuggliedes im Bereich der Gewindegänge im wesentlichen durch axiale Schubkräfte auf das jeweilige Verankerungselement übertragen wird, die Scherbeanspruchungen in den Gewindegängen hervorrufen. Um ein Abscheren der Gewindegänge, ein Aufbrechen des Faserstrangs in radialen Ebenen oder auch ein Abscheren zylindrischer Außenbereiche gegenüber zylindrischen Innenbereichen im Gewindebereich stabförmiger Zugglieder zu vermeiden, ist es bekannt, die Fasern in einem äußeren Bereich in wechselnden Schrägrichtungen anzuordnen und sie durch eine textile Verkettung mit tieferliegenden Fasern zu verankern (DE-OS 35 04 829). Auch für die Beanspruchung eines auf diese Weise erzeugten Gewindes bleibt aber die Scherwirkung dominant.

Bei einer Verankerungsvorrichtung der eingangs angegebenen Art ist es weiterhin bekannt, zwischen einem Zugglied aus Faserverbundwerkstoff und einem Verankerungskörper aus Stahl vor allem zwischen den miteinander in Eingriff befindlichen Gewindeflanken dieser beiden Elemente eine Pufferschicht als Plastifizierungszone vorzusehen (DE-OS 38 34 266). Die Festigkeit des für diese Pufferschicht verwendeten Materials muß geringer sein als die Festigkeit des Faserverbundwerkstoffs auf Querdruck, so daß unter Belastung ab einer bestimmten Druckspannung große Verformungen bei geringer Spannungszunahme möglich sind. In diesem Zusammenhang ist auch schon vorgeschlagen worden, die Profilierungen des Zugglieds, die aus einem unsymmetrischen Trapezgewinde bestehen können, dadurch zu erzeugen, daß auf den Stab während des Erhärtens des die unidirektionalen Fasern einhüllenden und miteinander verklebenden Kunstharzes von außen in radialer Richtung ein Verformungsdruck aufgebracht wird, durch den die Gewindekehlen als Einprägungen erzeugt werden; hierdurch werden die Fasern nicht zerschnitten, sondern nur in ihrem Verlauf etwas umgelenkt.

Schließlich ist es auch schon bekannt, ein Verankerungselement als Mutter aus Kunststoff auszubilden, bei der die Gewindegänge durch eine aus Kette und Schuß bestehende Bewehrung verstärkt sind (EP 0 403 940 A1). Auch hierdurch werden aber die Scherbeanspruchungen in den Gewindegängen des Zugstabes nicht vermindert.

Vor diesem Hintergrund liegt der Erfindung die Aufgabe zugrunde, eine den Festigkeitseigenschaften von Faserverbundwerkstoffen Rechnung tragende Ausbildung für eine Gewindeverankerung zu finden, bei der die gefährlichen Scherbeanspruchungen im Gewinde ebenso vermieden werden wie der zusätzliche Aufwand für das Einbringen einer Pufferschicht als Plastifizierungszone.

Gemäß der Erfindung wird diese Aufgabe durch die im kennzeichnenden Teil des Patentanspruchs 1 angegebenen Merkmale gelöst.

Die erfindungsgemäße Verankerungsvorrichtung kombiniert die Wirkungen einer Schraubverankerung mit denjenigen einer Keilverankerung. Durch den vergleichsweise flachen Anstellwinkel der Flanken der Gewinderippen wird bei einem gegen Ringzugkräfte steifen Verankerungskörper der radiale Anpreßdruck auf den Zugstab erhöht; dies führt zu größerer Tiefenwirkung und so zu einem höheren Scherwiderstand. Der Verankerungskörper trägt so nicht nur das für die Schraubwirkung erforderliche und die axialen Schubkräfte aufnehmende Innengewinde, sondern wirkt zusätzlich als Ringhülse für die Keilwirkung.

Der flache Anstellwinkel ermöglicht bei der Herstellung des Zugstabes auch ein gutes Einführen der ursprünglich unidirektional verlaufenden Fasern in das Gewindeprofil, so daß die einzelnen Gewinderippen mit der vollen Faserdichte des Stabquerschnittes besetzt sind. Eine weitere Verbesserung der Kraftübertragung kann dadurch erreicht werden, daß die unidirektionale Faseranordnung im Verankerungsbereich so verändert wird, daß auch innenliegende Fasern nach außen geführt werden und damit auf kurze Länge in den unmittelbaren Einflußbereich der Keilklemmkraft geraten.

In einer erfindungsgemäßen Verankerungsvorrichtung kann ein Zugstab aus Faserverbundwerkstoff grundsätzlich mittels eines Verankerungskörpers aus Stahl verankert werden. Wenn aber bestimmte Eigenschaften des Faserverbundwerkstoffes, z.B. die Korrosionsbeständigkeit, seine Anwendung bedingen, ist es wünschenswert, diese Eigenschaften auch bei dem Verankerungselement zu haben.

Zugglieder aus Faserverbundwerkstoffen erleiden infolge des geringeren Elastizitätsmoduls bei gleicher Belastung wesentlich höhere Dehnungen als entsprechende Zugglieder aus Stahl. Da im Bereich eines schraubbaren Verankerungskörpers der Zugstab unter Last gedehnt wird, während der gegen ein festes Widerlager abgestützte Verankerungskörper gestaucht wird, ergeben sich hohe Spannungskonzentrationen vor allem an dem der Abstützfläche des Verankerungskörpers zugewandten Ende, während am gegenüberliegenden freien Ende des Verankerungskörpers noch Reserven vorhanden sind, die nicht genutzt werden können.

Die erfindungsgemäße Kombination eines Gewindes mit einem flachen Neigungswinkel der Flanken der Gewinderippen, eines sogenannten Keilgewindes, und mit daraus resultierenden vergleichsweise hohen Radialkräften, die in dem als Ringhülse wirkenden Verankerungselement Ringzugspannungen hervorrufen, schafft die Voraussetzung dafür, mittels einer über die Länge des Gewindeeingriffs veränderlichen Ringzugsteifigkeit an der Stelle der hohen Spannungskonzentration eine Aufweitung des Verankerungselements zuzulassen, mit der Folge, daß der Zugstab sich etwas dehnen kann. Dadurch gelingt es, die zu verankernde Kraft gleichmäßiger über die Länge des Gewindeeingriffs zwischen Zugstab und Verankerungskörper zu verteilen, das Material also besser auszunützen.

Die Ringzugsteifigkeit des Verankerungselements kann auf relativ einfache Weise über seinen Querschnitt verändert werden. Da Bauteile aus Kunststoff in der Regel aber keine für die Aufnahme der Ringzugkräfte ausreichende Festigkeit aufweisen, sind zusätzliche Maßnahmen erforderlich, um die Ringzugkräfte aufzunehmen, wie z.B. eine entsprechende Bewehrung, die zugleich der Aufnahme der axialen Schubkräfte dienen oder auch aus unterschiedlichen Bewehrungselementen bestehen kann. Die Ringzugsteifigkeit kann deshalb auch über den Querschnitt der Bewehrung verändert werden, wobei entweder der Querschnitt der Bewehrungselemente selbst verändert oder an bestimmten Stellen auch zusätzliche Bewehrungselemente eingelegt werden können.

Die Erfindung wird nachstehend anhand der Zeichnung näher erläutert. Es zeigt
- Fig. 1: einen schematischen Querschnitt durch einen Tunnelvortrieb mit Sicherung des Gebirges durch Felsanker,
- Fig. 2: als Detail II in Fig. 1 den Verankerungsbereich eines Felsankers mit einem Verankerungskörper aus Stahl in größerem Maßstab,
- Fig. 3: in vergrößerter Darstellung den Kraftverlauf im Bereich der Kraftübertragung zwischen Stab- und Mutterngewinde gemäß der Erfindung,
- Fig. 4: einen schematischen Teilquerschnitt durch den Gewindebereich eines Ankerstabes,
- Fig. 5: einen Längsschnitt durch einen Verankerungskörper aus Kunststoff, die
- Fig. 6 bis 12: Teillängsschnitte durch Verankerungskörper mit unterschiedlich ausgebildeten bzw. angeordneten Bewehrungselementen und die
- Fig. 13 bis 15: Längsschnitte durch weitere Ausführungsformen eines Verankerungskörpers gemäß der Erfindung.

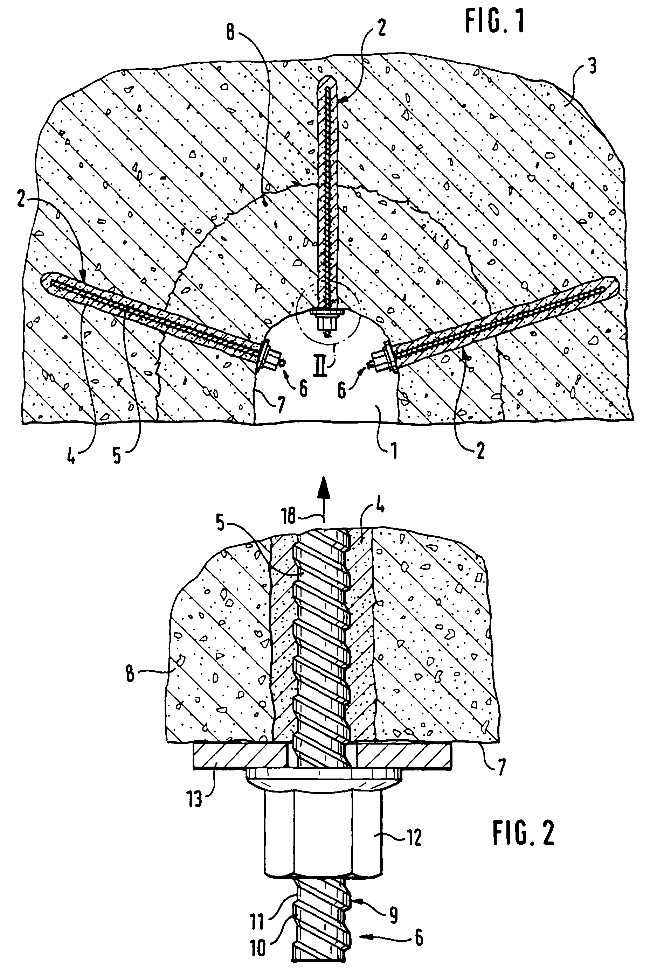

Ein typischer Anwendungsfall für ein Zug-Schraubelement aus Faserverbundwerkstoff gemäß der Erfindung ist die Sicherung von Gebirgsformationen im Bereich eines Ausbruchs z.B. für einen Tunnel. In Fig. 1 ist in einem Querschnitt ein zunächst aufgefahrener Pilotstollen 1 angedeutet, von dem aus Felsanker 2 radial in das Gebirge 3 eingetrieben sind. Jeder Felsanker 2 besteht aus jeweils einem in ein Bohrloch 4 eingesetzten Zugstab 5 mit einer luftseitigen Verankerung 6. Durch Injektion von erhärtendem Material in das Bohrloch 4 wird der Zugstab 5 darin fixiert, so daß er gegenüber der Ausbruchfläche 7 gespannt werden kann.

Die Verwendung von Zugstäben aus Faserverbundwerkstoffen gegenüber solchen aus Stahl hat neben dem geringeren Gewicht und der höheren Korrosionsbeständigkeit noch den Vorteil, daß beim späteren Ausbruch des schraffiert gezeichneten Ausbruchquerschnitts 8 die Zugstäbe 5 mittels quer zu ihrer Längsachse angreifender Kräfte zerstört werden können.

Fig. 2 zeigt in größerem Maßstab einen Längsschnitt durch eine Verankerung 6 eines solchen Felsankers 2. Der Zugstab 5 besteht aus einem Faserverbundwerkstoff entsprechender Festigkeit. Als Fasermaterial eignen sich Glasfasern besonders, weil ihre seitliche Druckfestigkeit im Vergleich zu anderen Fasern relativ hoch ist. Die Fasern sind zweckmäßig in eine Matrix aus Epoxidharz eingebettet. Der Stab 5 ist an seiner Oberfläche mit einer Profilierung versehen, die ein Gewinde 9 aus Gewinderippen 10 und Gewindekehlen 11 bildet. Auf das Gewinde des Stabes 5 ist eine Mutter in Form eines Verankerungskörpers 12 aufgeschraubt, der sich gegen eine Ankerplatte 13 abstützt, die ihrerseits an der Ausbruchfläche 7 anliegt.

Die Darstellung der Erfindung anhand eines solchen Felsankers gemäß den Fig. 1 und 2 ist nur beispielhaft zu verstehen; die Erfindung kann selbstverständlich auch bei allen anderen Zug-Schraubelementen, insbesondere bei Spanngliedern, und zwar sowohl bei Verankerungen, als auch bei Verbindungen von in entsprechender Weise ausgebildeten Stäben aus Faserverbundwerkstoffen eingesetzt werden.

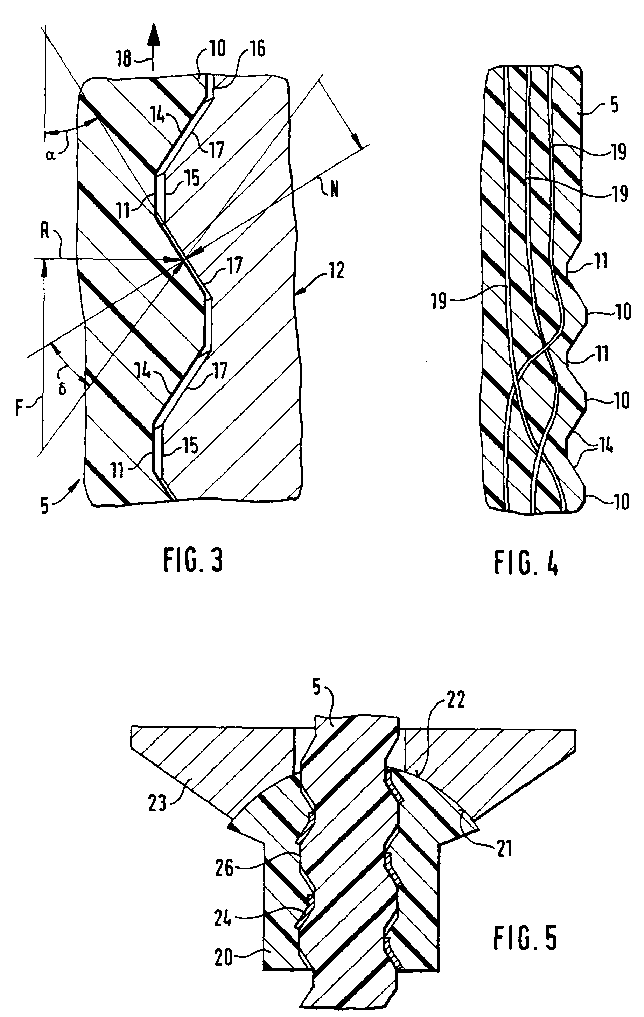

Fig. 3, die nur in einem kleinen Ausschnitt im Längsschnitt den Kraftübertragungsbereich zwischen dem Zugstab 5 und dem Verankerungskörper 12 zeigt, läßt das an der Oberfläche des Stabes 5 angeordnete Gewinde 9 aus Gewinderippen 10 und dazwischenliegenden Gewindekehlen 11 erkennen. Das Gewinde 9 ist als flaches Trapezgewinde ausgebildet, bei dem die Flanken 14 zwischen den Gewinderippen 10 und den Gewindekehlen 11 unter einem Winkel Alpha zur Stablängsachse angeordnet sind, der im dargestellten Ausführungsbeispiel etwa 30 Grad beträgt. Eine andere denkbare Gewindeform wäre auch ein flaches Kordelgewinde.

Der auf den Zugstab 5 aufgeschraubte Verankerungskörper 12 besteht, wie üblich, aus Stahl; er kann aber auch ebenfalls aus Faserverbundwerkstoffen bestehen. Der Verankerungskörper 12 trägt an seiner Innenfläche eine dem Stabgewinde entsprechende Profilierung wiederum aus Gewinderippen 15 und Gewindekehlen 16, zwischen denen die Gewindeflanken 17 in gleicher Weise unter dem Winkel Alpha zur Stablängsachse verlaufen wie die Flanken 14 des Stabgewindes.

Wenn nun auf den Zugstab 5 in Richtung des Pfeiles 18 eine Zugkraft ausgeübt wird, während sich der Verankerungskörper 12 gegenüber der Ankerplatte 13 abstützt, legen sich die Flanken 14 des Zugstabes 5 unmittelbar flächig gegen die entsprechend geneigten Flanken 17 des Verankerungskörpers 12 an. Aus der Zugkraft F resultieren dann unter Berücksichtigung des Reibungswinkels Delta eine Normalkraft N und eine Radialkraft R. Die Radialkraft R wird in dem Verankerungskörper 12 in Form einer Ringzugkraft aufgenommen, während die Normalkraft N in die Tiefe des Querschnitts des Zugstabes 5 gerichtet ist.

Die Größe der Radialkraft R ist, wie bei einer Keilverankerung, von dem Winkel Alpha abhängig, unter dem die Flanken 14 bzw. 17 gegen die Längsachse des Zugstabes 5 geneigt sind. Je größer die Radialkraft R im Verhältnis zur Ankerkraft F wird, desto stärker wirkt sie in die Tiefe des Stabes 5. Wesentlich für die Erfindung ist jedenfalls, daß im Bereich der Kraftübertragung zwischen Stab- und Mutterngewinde die Radialkraft R dominiert; nur hierdurch wird eine Tragwirkung erreicht, die die vorteilhaften Eigenschaften sowohl eines Schraubgewindes, als auch einer Keilverankerung kombiniert.

Um immer eine satte Anlage aller Gewindeflanken zu erreichen und etwaigen Spannungsspitzen entgegenzuwirken, die dadurch entstehen können, daß im Eingriffsbereich von Stab- und Mutterngewinde der Stab unter Last gedehnt und die Mutter gestaucht wird, können geringfügig unterschiedliche Steigungen vorgesehen werden, nämlich derart, daß die Steigung des Mutterngewindes etwas größer ist als die Steigung des Stabgewindes.

Das Gewinde auf dem Zugstab 5 wird vorteilhafterweise dadurch erzeugt, daß auf den Stab 5 während des Erhärtens des die unidirektionalen Fasern einhüllenden und miteinander verklebenden Kunstharzes von außen in radialer Richtung ein Verformungsdruck aufgebracht wird, durch den die Gewindekehlen 11 als Einprägungen erzeugt werden. Die unidirektionalen Fasern werden hierdurch nicht zerschnitten, sondern lediglich in ihrem Verlauf etwas umgelenkt.

Um die in die Tiefe des Stabes 5 gerichteten Kräfte besser aufnehmen und über den Stabquerschnitt verteilen zu können, ist es von Vorteil, wenn die unidirektionale Faseranordnung im Verankerungsbereich so verändert wird, daß auch die innenliegenden Fasern 19 nach außen geführt werden und damit auf kurze Länge im unmittelbaren Einflußbereich der Klemmwirkung angeordnet sind. Dies ist in Fig. 4, die einen teilweisen Längsschnitt durch einen Stab 5 im Gewindebereich darstellt, schematisch angedeutet.

Die erfindungsgemäße Gewindeausbildung, bei der die Flanken 14 der Gewinderippen 10 nur schwach gegen die Längsachse des Zugstabes 5 geneigt sind, erzeugt starke Querdrücke auf dem Zugstab selbst, die als Ringzugkräfte von einem das Innengewinde aufweisenden Verankerungs- oder auch Verbindungselement aufgenommen werden müssen. Besteht ein Verankerungs- oder Verbindungselement einheitlich aus einem zugfesten Werkstoff, wie z.B. Stahl, dann werden diese Ringzugspannungen selbst bei geringen Wandstärken verformungsarm aufgenommen, weil der das Innengewinde aufweisende Körper auch als Ringhülse wirkt.

Wenn aber bestimmte Eigenschaften des Faserverbundwerkstoffes, wie z.B. die Korrosionsbeständigkeit, die Anwendung bedingen, werden häufig für das Verankerungselement auch andere Materialien, vor allem Kunststoffe, eingesetzt. Reine Kunststoffe, wie z.B. Thermoplaste oder Duroplaste sind aber für die Aufnahme hoher Ringzugspannungen nicht geeignet, so daß damit die Funktion einer Ringhülse nicht ohne weiteres erreicht werden kann.

In den Fig. 5 bis 12 sind noch verschiedene Ausführungsbeispiele für ein Verankerungselement aus einem kombinierten Werkstoff, nämlich aus Kunststoff und zugfestem Material, dargestellt, das wirtschaftlich hergestellt werden kann und das es gestattet, sowohl die hohen Ringzugkräfte aus dem Flachgewinde aufzunehmen, als auch die axiale Kraftübertragung im Gewinde zu gewährleisten.

Fig. 5 zeigt eine der Fig. 2 ähnliche Verankerungsvorrichtung für einen Zugstab 5 mit einem Verankerungskörper 20 aus Kunststoff, der ein Innengewinde aufweist und - zur Erzielung einer gewissen Gelenkwirkung - mit einer Kugelsegmentfläche 21 gegen eine entsprechend ausgebildete Fläche 22 einer Ankerplatte 23 anliegt. In den Gewindebereich des Verankerungskörpers 20 ist eine Bewehrung 24 eingeformt.

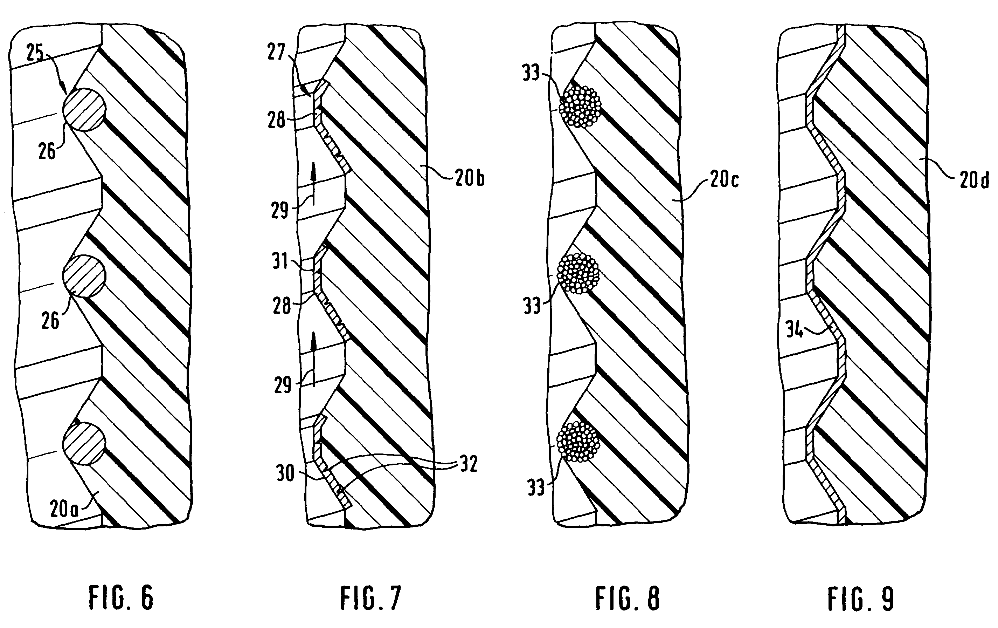

Verschiedene Ausführungsformen für solche in den Gewindebereich des Verankerungselementes eingeformte dehnarme, zugfeste Bewehrungen zeigen die Fig. 6 bis 8. Besonders wirkungsvoll sind solche Bewehrungen dann, wenn sie wendelförmig unmittelbar dem Gewindeverlauf folgen und in bzw. im Bereich der Gewindespitze des Innengewindes des Verankerungskörpers 20 liegen; dort erzielen sie einen besonders hohen Bewehrungseffekt, weil sie sowohl der Aufnahme der Ringzugspannungen, als auch der axialen Schubspannungen dienen.

Besonders einfach ist eine Wendel 25 aus Rundstahl (Fig. 6), deren Windungen 26 in den Gewindespitzen liegen und in diesem hoch beanspruchten Bereich unmittelbar das Gewindeprofil bilden. Eine sehr gleichmäßige Beanspruchung und günstige Lastübertragung wird durch ein Stahlband 27 erreicht (Fig. 7), das ebenfalls wendelförmig verläuft und dessen Windungen 28 sowohl die am stärksten, nämlich in Richtung der Pfeile 29 belastete Flanke 30 bewehren, als auch die Gewindespitze 31. Die Rückseite dieses Bandes 27 kann auch mit Profilierungen 32, z.B. Nuten, Rippen oder dergleichen zur Verbesserung der Haftung versehen sein.

Anstelle massiver Stahldrähte oder -bänder können auch Bündel oder Bänder 33 aus feinsten Drähten oder Fasern, und zwar sowohl metallische, insbesondere Stahlfasern, als auch nichtmetallische Fasern, z.B. aus Kohlenstoff, Aramid oder dergleichen verwendet werden (Fig. 8). Ihre Formanpassungsfähigkeit erlaubt auch Wicklungen rechtwinklig zur Längsachse, d.h. nicht entlang der durch das Gewinde bestimmten Schraubenlinie.

Wird ein geschlossenes Gewindeprofil 34 verwendet (Fig. 9), das z.B. aus einem Rohr geprägt, wendelförmig gewickelt oder längsgeschweißt sein kann, so kann dieses als Kern in ein Spritzwerkzeug zur Herstellung des Verankerungskörpers 20 eingesetzt werden, was zu einer Vereinfachung der Herstellung führt.

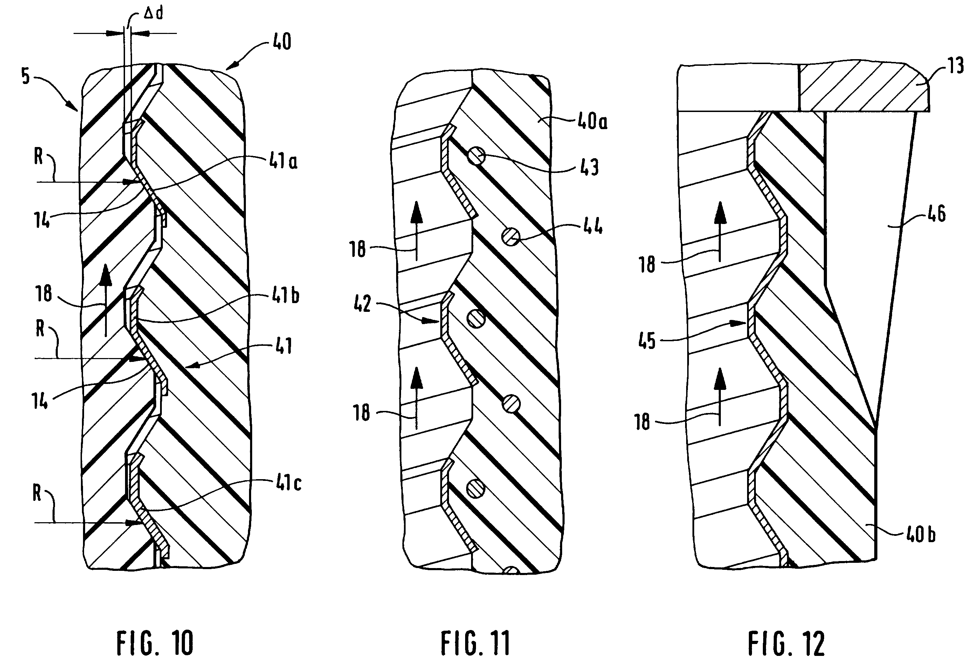

In den Fig. 10 bis 12 ist noch dargestellt, wie durch Wahl bzw. Anordnung der Bewehrungselemente eine über die Höhe des Verankerungskörpers veränderliche Ringzugsteifigkeit erzielt werden kann.

Fig. 10 zeigt einen der Fig. 3 entsprechenden Ausschnitt aus dem Kraftübertragungsbereich zwischen einem Zugstab 5 und einem Verankerungskörper 40 aus Kunststoff, der im Bereich des Gewindeprofils mit einer Wendelbewehrung 41 versehen ist. Die Richtung der auf den Zugstab 5 wirkenden Verankerungskraft ist wiederum durch einen Pfeil 18 angedeutet.

In dem dargestellten Ausführungsbeispiel haben die einzelnen Windungen 41a, b und c unterschiedlichen Querschnitt, der bei entsprechender Form durch unterschiedliche Dicke des die Wendel bildenden Stahlbandes erreicht ist. Die obere, der Abstützfläche zugewandte Windung 41a hat einen geringeren Querschnitt als die darauffolgende Windung 41b, die ihrerseits wieder einen geringeren Querschnitt als die nächstfolgende Windung 41c aufweist usw. Die im Eingriffsbereich der Gewindeprofilierungen über die schrägen Flanken 14 der Gewinderippen 10 auf den Verankerungskörper 40 ausgeübte Radialkraft R, die in diesem als Ringzugkraft aufgenommen werden muß, bewirkt im Bereich der geringeren Ringzugsteifigkeit infolge der Windung 41a mit dem geringeren Bewehrungsquerschnitt eine Aufweitung des Verankerungskörpers 40, die mit Delta d angedeutet ist. Infolge der Geometrie der Gewindeprofilierung wird hierdurch an dieser Stelle eine Axialdehnung des Zugstabes 5 ermöglicht. Diese Erscheinung setzt sich in analoger Form im Bereich der Windungen 41b und 41c fort.

Selbstverständlich ist diese Darstellung nur schematisch gedacht; es können selbstverständlich beliebig viel Windungen vorgesehen und die Abstufungen der Windungen untereinander kleiner oder größer sein. Auch ist es möglich, die unterschiedliche Ringzugsteifigkeit des Verankerungskörpers 40 auf andere Weise zu erreichen, wie beispielsweise in den Fig. 11 und 12 angedeutet ist.

In Fig. 11 ist an einem Ausschnitt aus dem Gewindeprofil eines Verankerungskörpers 40a eine Trennung zwischen den Bewehrungselementen dargestellt, die der Übertragung der axialen Schubkräfte dienen und den Bewehrungselementen, die zur Aufnahme der Ringzugkräfte vorgesehen sind. Der Übertragung der axialen Schubkräfte dient eine die lastzugewandten Flanken der Gewinderippen sowie die Spitzen und die Täler abdeckende Wendel 42, die in diesem Fall auch aus einzelnen Teilen bestehen könnte. Zur Aufnahme der Ringzugkräfte ist in die Rippen eine Stahldrahtwendel 43 eingebettet, die über die gesamte Höhe des Verankerungskörpers 40a durchläuft. Der Veränderung der Ringzugsteifigkeit dient eine zusätzliche Wendel 44, der gegebenenfalls auch noch eine weitere, entsprechend angeordnete Wendel folgen kann.

Ebenfalls eine Trennung zwischen den die axialen Schubkräfte und den die Ringzugkräfte aufnehmenden Bewehrungselementen zeigt der Teillängsschnitt durch einen Verankerungskörper 40b gemäß Fig. 12. Der Gewindeprofilierung folgt hier eine geschlossene Hülse 45, während der Verankerungskörper 40b selbst zur Aufnahme der Ringzugkräfte in an sich bekannter Weise durch Einbettung von Faserstoffen befähigt ist. Um an der der Ankerplatte 13 zugewandten Seite dennoch eine ausreichend große Aufstandsfläche des Verankerungskörpers 40b zu haben, ist hier die die Veränderung der Ringzugsteifigkeit bewirkende Querschnittsverringerung des Verankerungskörpers 40b selbst durch Schlitze 46 bewirkt, die den Querschnitt des Verankerungskörpers 40b selbst in Richtung zur Abstützfläche 47 hin verringern.

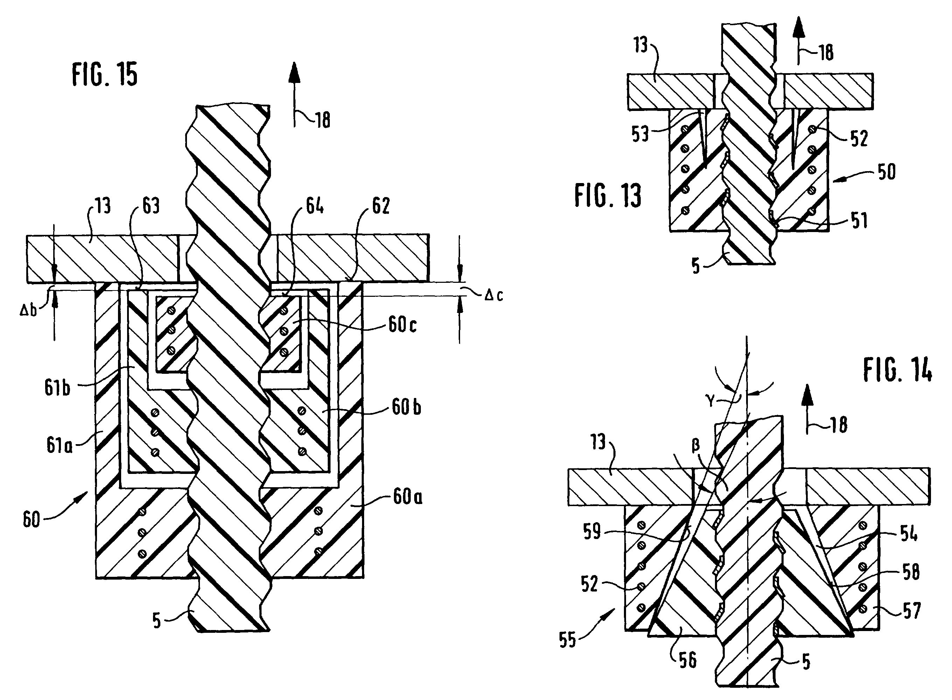

Zwei weitere Ausführungsbeispiele für die Veränderung der Ringzugsteifigkeit des Verankerungskörpers durch Querschnittsverringerung ist in den Fig. 13 und 14 dargestellt. So ist in Fig. 13 der Verankerungskörper 50 sowohl mit Bewehrungselementen 51 im Bereich der Gewindeprofilierung zur Aufnahme der axialen Schubkräfte, als auch mit einer Bewehrung 52, z.B. einer Wendel, zur Aufnahme der Ringzugkräfte versehen. Um dennoch dem Verankerungskörper 50 in dem der Abstützung an der Ankerplatte 13 benachbarten Bereich eine Möglichkeit zur Aufweitung zu geben, ist hier in den Körper von der Stirnseite her ein keilförmiger Ringspalt 53 eingebracht. Bei Belastung der der Ankerplatte 13 nächstliegenden Gewinderippen kann der am Zugstab 5 anliegende Teil des Verankerungskörpers 50 radial ausweichen, bis der Ringspalt 53 sich geschlossen hat. Der Verankerungskörper 50 gewährleistet dann durch seine Bewehrung 52 die weitere Aufnahme der Ringzugkräfte.

Bei dem in Fig. 14 dargestellten Ausführungsbeispiel besteht der Verankerungskörper 55 selbst aus zwei Teilen, nämlich einem inneren Schraubteil 56 und einer äußeren Ringhülse 57. Das innere Schraubteil 56 hat eine konisch unter dem Winkel Beta zur Längsachse verlaufende Außenfläche 58, die Ringhülse 57 eine unter dem kleineren Winkel Gamma gegen die Längsachse geneigte Innenfläche 59, so daß zwischen diesen beiden Flächen ein Ringspalt 54 verbleibt. Auch in diesem Fall kann sich bei zunehmender Belastung der der Abstützung an der Ankerplatte 13 benachbarte Teil des inneren Schraubteils 56 aufweiten, bis der Ringspalt 54 geschlossen ist und eine weitere Aufweitung durch die äußere Ringhülse 57 verhindert wird. Die Ringhülse 57 kann, ähnlich wie in dem Ausführungsbeispiel nach Fig. 13, eine Bewehrung 52 aufweisen; sie könnte aber auch ganz aus Stahl bestehen.

Es liegt auf der Hand, daß es über die hier dargestellten Variationen hinaus noch eine große Anzahl weiterer Möglichkeiten gibt, die Ringzugsteifigkeit einer Verankerungsmutter durch Veränderung ihres oder des Querschnitts ihrer Ringzugbewehrung zu verändern.

Die vorbeschriebene Steuerung der Kraftübertragung zwischen Ankerstab und Verankerungselement ist nur anwendbar, solange das Ausmaß der Dehnung des Ankerstabes im Verankerungsbereich die Steigung des Gewindes, d.h. den Abstand zwischen zwei aufeinanderfolgenden Gewindegängen nicht übersteigt. Ist eine Dehnungsregulierung infolge Aufweitung des Verankerungselements aus solchen geometrischen Gründen nicht möglich, dann besteht die Möglichkeit, das Verankerungselement aus mehreren voneinander getrennten Teilen auszubilden, die in axialer Richtung hintereinander auf dem Ankerstab angeordnet und unabhängig voneinander gegenüber dem Widerlager abgestützt sind. Eine solche Verankerungsvorrichtung ist in Fig. 13 dargestellt.

Bei diesem Ausführungsbeispiel besteht der Verankerungskörper 60 aus drei jeweils gemäß der Erfindung ausgebildeten Teilen 60a, 60b und 60c, die unabhängig und jeweils mit geringem Abstand voneinander auf den Zugstab 5 aufgeschraubt sind. Dabei ist das innerste Teil 60c als normale Mutter ausgebildet; es hält einen Abstand Delta c von der Ankerplatte 13 ein. Die weiteren Teile 60b und 60a sind außerhalb des Teils 60c angeordnet und stützen sich mit topfartigen Ansätzen 61b und 61a unabhängig voneinander jeweils unmittelbar gegenüber der Ankerplatte 13 ab. Im dargestellten Ausführungsbeispiel ist die Anordnung so getroffen, daß das äußerste Teil 60a sich mit seiner Abstützfläche 62 bereits in Eingriff mit der Ankerplatte 13 befindet; das mittlere Teil 60b befindet sich mit seiner Abstützfläche 63 im Abstand Delta b von der Ankerplatte 13 und das innere Teil 60c mit seiner Abstützfläche 64 im Abstand Delta c.

Dehnt sich bei dieser Verankerungsvorrichtung der Zugstab 5 durch Teilverankerung gegenüber dem Teil 60a, dann bewegt sich das Teil 60b infolge der Dehnung in Richtung der durch den Pfeil 18 symbolisierten Ankerkraft in Richtung auf die Ankerplatte 13 hin, bis seine Abstützfläche 63 dort ebenfalls anliegt und dieses Teil zur Verankerung beiträgt. Bei fortdauernder Dehnung kommt in analoger Weise zuletzt das Teil 60c mit seiner Abstützfläche 64 in Berührungskontakt mit der Ankerplatte 13.

Auch hier sind beliebige weitere Abstützungskonfigurationen denkbar; die Teile können auch kraftschlüssig miteinander verbunden sein.

## Patentansprüche

1. Vorrichtung zur Verankerung eines stabförmigen Zugglieds aus Faserverbundwerkstoff mit unidirektionalen, in eine Matrix aus Kunstharz eingebetteten Fasern, insbesondere zur Verwendung als Ankerelement im Grund- oder Bergbau, als Bewehrungselement für Beton, insbesondere Spannbeton oder dergleichen, wobei das Zugglied zumindest in den zur Verankerung vorgesehenen Bereichen mit durch Einprägen erzeugten, entlang einer Schraubenlinie verlaufenden und ein durchgehendes Gewinde bildenden Rippen (10) versehen ist, auf die ein mit einem entsprechenden Innengewinde versehener Verankerungskörper (12, 20, 40, 50, 55) aufgeschraubt ist, dadurch gekennzeichnet, daß sowohl der Neigungswinkel (Alpha) der Flanken (14) der Rippen (10) zur Längsachse des Zugstabes, als auch der Flanken (17) der Gewindekehlen (16) zur Längsachse des Verankerungskörpers (12) zur Erzielung eines Radialdrucks auf den Zugstab infolge Keilwirkung kleiner als 45 Grad ist.

2. Vorrichtung nach Anspruch 1, dadurch gekennzeichnet, daß der Neigungswinkel (Alpha) kleiner als 30 Grad ist.

3. Vorrichtung nach Anspruch 2, dadurch gekennzeichnet, daß der Neigungswinkel (Alpha) etwa zwischen 15 Grad und 30 Grad beträgt.

4. Vorrichtung nach einem der Ansprüche 1 bis 3, dadurch gekennzeichnet, daß die Rippen (10) ein flaches Trapezgewinde bilden.

5. Vorrichtung nach einem der Ansprüche 1 bis 4, dadurch gekennzeichnet, daß die Ganghöhe des Gewindes des Verankerungselements (12) etwas größer ist als die Ganghöhe des Gewindes des Zugstabes (5).

6. Vorrichtung nach einem der Ansprüche 1 bis 5, dadurch gekennzeichnet, daß in den zur Verankerung vorgesehenen Bereichen des Zugstabes (5) die bezüglich des Stabquerschnitts innenliegenden Fasern (19) in die äußeren Bereiche geführt sind.

7. Vorrichtung nach einem der Ansprüche 1 bis 6 mit einem Verankerungskörper aus Kunststoff, dadurch gekennzeichnet, daß der Verankerungskörper (12, 20, 40, 50, 55) über die Länge des Gewindeeingriffs mit dem Zugglied eine mit der Länge veränderliche Ringzugsteifigkeit aufweist.

8. Vorrichtung nach Anspruch 7, dadurch gekennzeichnet, daß die Ringzugsteifigkeit des Verankerungskörpers (40, 50, 55) an seinem der Abstützfläche zugewandten Ende geringer ist als an dem gegenüberliegenden freien Ende.

9. Vorrichtung nach Anspruch 7 oder 8, dadurch gekennzeichnet, daß zur Veränderung der Ringzugsteifigkeit der Querschnitt des Verankerungskörpers (50, 55) verändert ist.

10. Vorrichtung nach einem der Ansprüche 7 bis 9, dadurch gekennzeichnet, daß der Verankerungskörper (55) aus einem inneren Schraubteil (56) mit konischer Außenfläche (58) und einer äußeren Ringhülse (57) mit konischer Innenfläche (59) ausgebildet ist, wobei der Neigungswinkel (Beta) der Außenfläche des Schraubteils (56) zur Längsachse größer ist als der Neigungswinkel (Gamma) der Innenfläche der Ringhülse (57) zur Längsachse, so daß sich im unbelasteten Zustand zwischen der Außenfläche (58) des Schraubteils (56) und der Innenfläche (59) der Ringhülse (57) ein sich zur Abstützfläche hin erweiternder Ringspalt (54) befindet.

11. Vorrichtung nach einem der Ansprüche 7 bis 10, daduch gekennzeichnet, daß in den Verankerungskörper (20, 40, 50, 55) zumindest im Bereich des Gewindeprofils, insbesondere der Gewinderippen, zug- und/oder druckfeste sowie dehnarme Bewehrungselemente (24, 26, 32, 33, 41, 52) zur Aufnahme von axialen Schubkräften und/oder Ringzugkräften eingeformt sind.

12. Vorrichtung nach Anspruch 11, dadurch gekennzeichnet, daß zur Aufnahme der axialen Schubkräfte und der Ringzugkräfte unterschiedliche Bewehrungselemente vorgesehen sind.

13. Vorrichtung nach Anspruch 11 oder 12, dadurch gekennzeichnet, daß zur Veränderung der Ringzugsteifigkeit des Verankerungskörpers der Querschnitt zumindest eines der Bewehrungselemente verändert ist.

14. Vorrichtung nach einem der Ansprüche 11 bis 13, dadurch gekennzeichnet, daß als Bewehrungselement zumindest eine Wendel (24, 26) aus Profilstahl vorgesehen ist.

15. Vorrichtung nach Anspruch 14, dadurch gekennzeichnet, daß die Wendel so in die Gewinderippen eingebaut ist, daß ein Teil der Oberfläche ihrer Windungen zugleich einen Teil der Oberfläche der Gewinderippen bildet.

16. Vorrichtung nach Anspruch 15, dadurch gekennzeichnet, daß die Wendel aus Stahldraht (25) besteht und ihre Windungen (26) in den Gewindespitzen liegen.

17. Vorrichtung nach Anspruch 15, dadurch gekennzeichnet, daß die Wendel aus einem Stahlband (27) besteht, das in Querrichtung der Kontur der Rippen entsprechend geformt ist.

18. Vorrichtung nach Anspruch 17, dadurch gekennzeichnet, daß das Stahlband (27) auf der Rückseite mit Profilierungen (32), wie z.B. Rippen, versehen ist.

19. Vorrichtung nach einem der Ansprüche 11 bis 13, dadurch gekennzeichnet, daß als Bewehrungselement Bündel oder Bänder (33) aus feinsten Drähten oder Fasern vorgesehen sind.

20. Vorrichtung nach einem der Ansprüche 11 bis 13, dadurch gekennzeichnet, daß als Bewehrungselement ein geschlossenes Gewindeprofil (34), wie z.B. ein profiliertes Rohr oder dergleichen vorgesehen ist.

21. Vorrichtung nach einem der Ansprüche 7 bis 20, dadurch gekennzeichnet, daß der Verankerungskörper (60) aus mindestens zwei voneinander getrennten Teilen (60a, b, c) besteht, die in axialer Richtung hintereinander auf dem Zugstab (5) angeordnet und unabhängig voneinander gegenüber dem Widerlager (13) abgestützt sind.

22. Vorrichtung nach Anspruch 21, dadurch gekennzeichnet, daß die Teile (60a, b, c) des Verankerungselements so angeordnet bzw. abgestützt sind, daß sie in Abhängigkeit von der durch die Belastung des Zugstabes (5) hervorgerufenen Verformung wirksam werden.

23. Vorrichtung nach Anspruch 22, dadurch gekennzeichnet, daß die Anordnung so getroffen ist, daß die dem Widerlager abgewandten Teile (60a bzw. 60b) zuerst wirksam werden.

## Claims

1. A device for anchoring a rod-like tension member of composite fibre material with unidirectional fibres embedded in a matrix of synthetic resin, in particular for use as an anchor member in foundation engineering or mining, as a reinforcing element for concrete, in particular prestressed concrete or the like, wherein, at least in the zones intended for anchoring, the tension member is provided with ribs (10) which are produced by stamping, which extend along a helix and which form a continuous screw-thread, an anchor member (12,20,40,50,55) provided with a corresponding internal thread being screwed on to said ribs, characterised in that both the angle of inclination (alpha) of the flanks (14) of the ribs (10) relative to the longitudinal axis of the tension rod and of the flanks (17) of the thread grooves (16) relative to the longitudinal axis of the anchor member (12) is less than 45 degrees so as to produce a radial pressure on the tension rod as a result of a wedging action.

2. A device according to Claim 1, characterised in that the angle of inclination (alpha) is less than 30 degrees.

3. A device according to Claim 2, characterised in that the angle of inclination (alpha) is approximately between than 15 and 30 degrees.

4. A device according to any one of Claims 1 to 3, characterised in that the ribs (10) form a shallow trapezoidal screw-thread.

5. A device according to any one of Claims 1 to 4, characterised in that the pitch of the thread of the anchor member (12) is slightly greater than the pitch of the thread of the tension rod (5).

6. A device according to any one of Claims 1 to 5, characterised in that, in the zones of the tension rod (5) intended for anchoring, the internal fibres (19) with respect to the rod cross-section are guided into the outer zones.

7. A device according to any one of Claims 1 to 6, with an anchor member of synthetic material, characterised in that over the length of the thread engagement with the tension member the anchor member (12,20,40,50,55) has an annular tensile rigidity varying with length.

8. A device according to Claim 7, characterised in that the annular tensile rigidity of the anchor member (40,50,55) at its end nearest the support surface is lower than at the opposite free end.

9. A device according to Claim 7 or 8, characterised in that the cross-section of the anchor member (50,55) is varied so as to vary the annular tensile rigidity.

10. A device according to any one of Claims 7 to 9, characterised in that the anchor member (55) is formed from an inner screw part (56) with a tapered outer surface (58) and an outer annular sleeve (57) with a tapered inner surface (59), wherein the angle of inclination (beta) of the outer surface of the screw part (56) relative to the longitudinal axis is greater than the angle of inclination (gamma) of the inner surface of the annular sleeve (57) relative to the longitudinal axis, so that in the unloaded condition an annular gap (54) widening towards the support surface is provided between the outer surface (58) of the screw part (56) and the inner surface (59) of the annular sleeve (57).

11. A device according to any one of Claims 7 to 10, characterised in that reinforcing elements (24,26,32,33, 41,52), which are tension-resistant and/or pressure resistant and have low expansion, for accommodating axial shearing forces and/or annular tensile forces, are formed in the anchor member (20,40,50, 55) at least in the area of the threaded profile, in particular of the thread ribs.

12. A device according to Claim 11, characterised in that the different reinforcing elements are provided to accommodate the axial shearing forces and the annular tensile forces.

13. A device according to Claim 11 or 12, characterised in that to vary the annular tensile rigidity of the anchor member the cross-section of at least one of the reinforcing elements is varied.

14. A device according to any one of Claims 11 to 13, characterised in that at least one coil (24,26) of sectional steel is provided as the reinforcing element.

15. A device according to Claim 14, characterised in that the coil is so incorporated into the thread ribs that one part of the surface of its turns forms at the same time a part of the surface of the thread ribs.

16. A device according to Claim 15, characterised in that the coil consists of steel wire (25) and its turns (26) lie on the thread crests.

17. A device according to Claim 15, characterised in that the coil consists of a steel strip (27) which in transverse direction is formed matching the contour of the ribs.

18. A device according to Claim 17, characterised in that the steel strip (27) is provided on its rear side with profiled elements (32), for example ribs.

19. A device according to any one of Claims 11 to 13, characterised in that the bundles or strips (33) of very fine wires or fibres are provided as the reinforcing element.

20. A device according to any one of Claims 11 to 13, characterised in that a closed thread profile (34), for example a profiled tube or the like, is provided as the reinforcing element.

21. A device according to any one of Claims 7 to 20, characterised in that the anchor member (60) comprises at least two parts (60a,b,c) which are separated from one another, which are disposed consecutively in axial direction on the tension rod (5) and which are supported independently of one another with respect to the abutment (13).

22. A device according to Claims 21, characterised in that the parts (60a,b,c) of the anchor member are so arranged and/or supported that they are operative as a function of the deformation caused by the loading of the tension rod (5).

23. A device according to Claim 22, characterised in that the arrangement is such that the parts (60a and 60b respectively) remote from the abutment are firstly operative.

## Revendications

1. Dispositif d'ancrage d'un organe de traction se présentant sous forme de barre et constitué d'un matériau composite comportant des fibres unidirectionnelles noyées dans une matrice en résine synthétique, en particulier pour être utilisé à titre d'élément d'ancrage dans des fondations ou l'exploitation minière, à titre d'élément d'armature pour du béton, en particulier du béton précontraint ou analogue, l'organe de traction étant pourvu, au moins dans les zones prévues pour l'ancrage, de nervures (10), formées par empreinte, s'étendant le long d'une hélice et constituant un filetage continu, nervures sur lesquelles est vissé un corps d'ancrage (12, 20, 40, 50, 55) pourvu d'un taraudage correspondant, caractérisé en ce que aussi bien l'angle d'inclinaison (alpha) des flans (14) des nervures (10) par rapport à l'axe longitudinal de la barre de traction, que celui des flans (17) des creux de filetage (16) par rapport à l'axe longitudinal du corps d'ancrage (12) est inférieur à 45° en vue d'obtenir une pression radiale sur la barre de traction, suite à l'effet de coin provoqué.

2. Dispositif selon la revendication 1, caractérisé en ce que l'angle d'inclinaison (alpha) est inférieur à 30°.

3. Dispositif selon la revendication 2, caractérisé en ce que l'angle d'inclinaison (alpha) est compris entre environ 15° et 30°.

4. Dispositif selon l'une des revendications 1 à 3, caractérisé en ce que les nervures (10) constituent un filetage trapézoïdal plat.

5. Dispositif selon l'une des revendications 1 à 4, caractérisé en ce que le pas du filetage de l'élément d'ancrage (12) est quelque peu supérieur au pas du filetage de la barre de traction (5).

6. Dispositif selon l'une des revendications 1 à 5, caractérisé en ce que les fibres (19) situées à l'intérieur par rapport à la section transversale de la barre sont guidées dans les zones extérieures, ceci dans les zones de la barre de traction (5) ayant été prévues pour assurer l'ancrage.

7. Dispositif selon l'une des revendications 1 à 6, comprenant un corps d'ancrage en matière synthétique, caractérisé en ce que le corps d'ancrage (12, 20, 40, 50, 55) présente, sur la longueur de la mise en prise du filetage avec l'organe de traction, une rigidité de traction à l'anneau qui varie en fonction de la longueur.

8. Dispositif selon la revendication 7, caractérisé en ce que la rigidité de traction à l'anneau du corps d'ancrage (40, 50, 55) au niveau de son extrémité tournée vers la surface d'appui est inférieure à sa valeur sur l'extrémité libre opposée.

9. Dispositif selon la revendication 7 ou 8, caractérisé en ce qu'on change la section transversale du corps d'ancrage (50, 55) pour modifier la rigidité de traction à l'anneau.

10. Dispositif selon l'une des revendications 7 à 9, caractérisé en ce que le corps d'ancrage (55) est réalisé à partir d'une partie de vissage intérieure (56) ayant une surface extérieure conique (58) et d'une douille annulaire extérieure (57) ayant une surface intérieure conique (59), l'angle d'inclinaison (béta) de la surface extérieure de la partie de vissage (56) par rapport à l'axe longitudinal étant supérieur à l'angle d'inclinaison (gamma) de la surface intérieure de la douille annulaire (57) par rapport à l'axe longitudinal, si bien que, à l'état non chargé, un interstice annulaire (54) est créé qui va en s'agrandissant en direction de la surface d'appui, entre la surface extérieure (58) de la partie de vissage (56) et la surface intérieure (59) de la douille annulaire (57).

11. Dispositif selon l'une des revendications 7 à 10, caractérisé en ce que, dans le corps d'ancrage (20, 40, 50, 55) sont formés, au moins dans la zone du profil fileté, en particulier des nervures de filetage, des éléments d'armature (24, 26, 32, 33, 41, 52), résistant à la traction et/ou à la compression et peu extensibles, destinés à supporter des efforts de poussée axiale et/ou des efforts de traction annulaire.

12. Dispositif selon la revendication 11, caractérisé en ce que des éléments d'armature différents sont prévus pour supporter les efforts de poussée axiale et les efforts de traction annulaire.

13. Dispositif selon la revendication 11 ou 12, caractérisé en ce qu'on change la section transversale au moins d'un des éléments d'armature en vue de modifier la rigidité de traction à l'anneau du corps d'ancrage.

14. Dispositif selon l'une des revendications 11 à 13, caractérisé en ce qu'au moins une hélice (24, 26) en profilé d'acier est prévue à titre d'élément d'armature.

15. Dispositif selon la revendication 14, caractérisé en ce que l'hélice est intégrée dans les nervures de filetage, de manière qu'une partie de la surface de ses enroulements constitue en même temps une partie de la surface des nervures de filetage;

16. Dispositif selon la revendication 15, caractérisé en ce que l'hélice est constituée de fils d'acier (25) et ses enroulements (26) sont placés aux pointes du filetage.

17. Dispositif selon la revendication 15, caractérisé en ce que l'hélice est constituée d'un ruban d'acier (27) formé de manière correspondante dans la direction transversale du contour des nervures.

18. Dispositif selon la revendication 17, caractérisé en ce que la face arrière du ruban d'acier (27) est pourvue de profilages (32) tels que des nervures.

19. Dispositif selon l'une des revendications 11 à 13, caractérisé en ce que sont prévus à titre d'éléments d'armature des faisceaux ou des rubans (33) constitués de fils ou de fibres très minces.

20. Dispositif selon l'une des revendications 11 à 13, caractérisé en ce qu'est prévu à titre d'élément d'armature un profil fileté fermé (34), tel qu'un tube profilé ou analogue.

21. Dispositif selon l'une des revendications 7 à 20, caractérisé en ce que le corps d'ancrage (60) est constitué d'au moins deux parties (60a, b, c) séparées les unes des autres, disposées l'une derrière l'autre en direction axiale sur la barre de traction (5) et soutenues indépendamment les unes des autres par rapport au contre-appui (13).

22. Dispositif selon la revendication 21, caractérisé en ce que les parties (60a, b, c) de l'élément d'ancrage sont disposées ou soutenues, de manière à agir en fonction de la déformation provoquée par la sollicitation de la barre de traction (5).

23. Dispositif selon la revendication 22, caractérisé en ce que l'agencement est tel que ce sont les parties (60a ou 60b) opposées au contre-appui qui entrent les premières en action.
